# EUROPÄISCHE PATENTANMELDUNG

(11) **EP 1 164 453 A2**
(43) Veröffentlichungstag der Anmeldung: **19.12.2001**
(21) Anmeldenummer: 01107675.9
(22) Anmeldetag: 28.03.2001
(51) Int. Cl.: G05D 23/13

(54) **Wasserarmatur mit Thermostat**

(30) Priorität: 14.06.2000 DE 10029229
(71) Anmelder: KLUDI-Armaturen Scheffer Vertriebs- und Verwaltungs oHG, 58706 Menden (DE)
(72) Erfinder: Katzer, Dieter, 49401 Damme (DE); Wiesendahl, Guido, 58313 Herdecke (DE)
(74) Vertreter: COHAUSZ HANNIG DAWIDOWICZ & PARTNER

(57) **Zusammenfassung**

Die Erfindung betrifft eine Wasserarmatur mit einem Thermostat zur Regelung des Gemisches aus Kalt- und Warmwasser. Der Thermostat ist durch ein Bedienungsteil insbesondere einen Handknopf verstellbar, der einen Sperrknopf aus Kunststoff aufweist, der ein Betätigen des Bedienungsteils zum heißen Bereich hin und/oder eine Einstellung der Wassermenge zum größeren Bereich hin solange verhindert, bis der Sperrknopf zum Lösen der Sperre gedrückt ist. Der Sperrknopf trägt aus Kunststoff im außen sichtbaren Bereich eine metallene Haube.

## Beschreibung

Die Erfindung betrifft eine Wasserarmatur mit einem Thermostat zur Regelung des Gemisches aus Kalt- und Warmwasser, wobei der Thermostat durch ein Bedienungsteil insbesondere einen Handknopf verstellbar ist, der einen Sperrknopf aus Kunststoff aufweist, der ein Betätigen des Bedienungsteils zum heißen Bereich hin und/oder eine Einstellung der Wassermenge zum größeren Bereich hin solange verhindert, bis der Sperrknopf zum Lösen der Sperre gedrückt ist.

Es ist bekannt den Sperrknopf am Handknopf eines Thermostaten an einer Wasserarmatur aus Kunststoff herzustellen. Kunststoff bietet sich hier besonders an, da dieses Teil kompliziert geformt ist und Kunststoff hierbei eine preiswertere Herstellung ermöglicht als eine Fertigung aus Metall. Kunststoff hat aber den Nachteil, dass dieses Teil optisch wenig ansprechend aussieht und leicht durch Kratzer unansehnlich wird, die insbesondere durch ein regelmäßiges Putzen entstehen können.

Aufgabe der Erfindung ist es, den Sperrknopf einer Wasserarmatur der eingangs genannten Art so zu verbessern, dass er bei einfacher und preiswerter Herstellung ein optisch ansprechendes Äußeres über längere Zeit beibehält.

Diese Aufgabe wird erfindungsgemäß dadurch gelöst, dass der Sperrknopf aus Kunststoff im außen sichtbaren Bereich eine metallene Haube trägt.

Hierdurch erfolgt eine Zweiteilung des Sperrknopfes. Das aus Kunststoff bestehende Unterteil ist einfach und preiswert auch bei komplizierter Formgebung herstellbar. Der äußere Bereich des Unterteils ist von einer metallenen Haube überdeckt, die als Sichtteil dient und einen wertvollen Eindruck schafft. Hierbei ist die Oberfläche des Oberteils weitgehend kratzfest, so dass auch nach längerer Zeit keine sichtbaren Veränderungen auftreten.

Besonders vorteilhaft ist es, wenn die Haube außenseitig verchromt ist. Eine solche Chromschicht läßt sich einfach und haltbar auf der metallenen Haube aufbringen. Vorzugsweise wird vorgeschlagen, dass die Haube aus Messing ist.

Besonders vorteilhaft ist es, wenn die Haube am Kunststoff durch eine Rastverbindung, Schraubverbindung, Klebverbindung oder durch Ausspritzen mit Kunststoff befestigt ist.

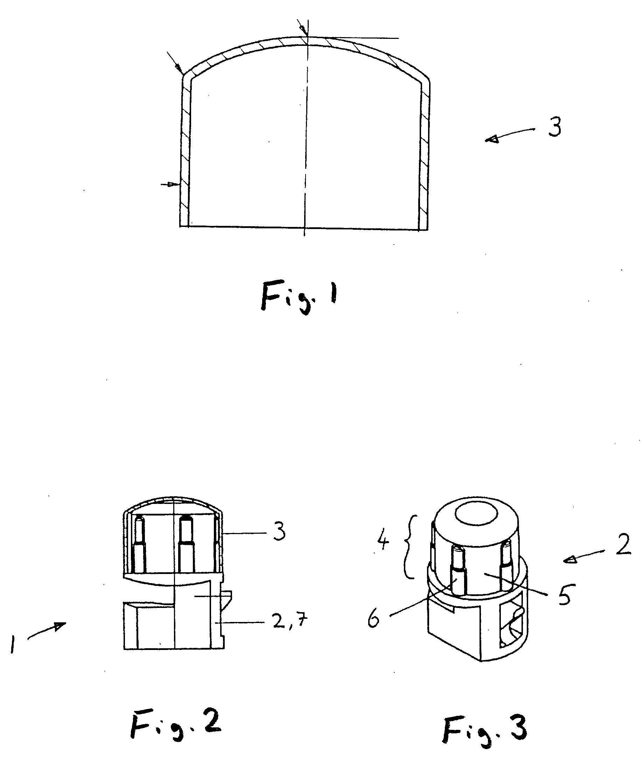

Ein Ausführungsbeispiel der Erfindung ist in der Zeichnung dargestellt und wird im folgenden näher beschrieben. Es zeigen
- Fig. 1: einen axialen Schnitt durch die metallene Haube in starker Vergrößerung,
- Fig. 2: einen axialen Schnitt durch das Unterteil mit aufgesetzter Haube in vergrößertem Maßstab und
- Fig. 3: eine perspektivische Ansicht des Unterteils ohne Haube in vergrößertem Maßstab.

Der Sperrknopf 1 ist im von Hand betätigbaren Bedienteil eines Thermostates eingelassen. Der Sperrknopf lässt ein Verdrehen des Bedienteils nur über einen bestimmten Drehwinkel zu. Soll ein Verdrehen darüber hinaus erreicht werden, um mehr heißeres Wasser oder eine höhere Temperatur zu erhalten, so muss der Sperrknopf eingedrückt werden.

Der zylindrische Sperrknopf 1 besteht aus mindestens zwei Bauteilen. Das Unterteil besteht aus Kunststoff und besitzt die funktionsrelevanten Eigenschaften. Das Oberteil ist als Haube ausgebildet, dient als Sichtteil und führt keine technische Funktion aus.

Das Unterteil 2 kann von beliebiger Farbe sein, da es für den Kunden nicht sichtbar ist. Das Oberteil ist aus Metall vorzugsweise aus Messing. Dadurch kann eine hochwertige Optik erreicht werden. Insbesondere durch hochwertiges Metall wird die Haptik für den Benutzer verbessert. Da das Oberteil 3 aus Metall ist, sind Beschichtungsverfahren möglich, die mit einem Kunststoffbauteil nicht möglich wären.

Ober- und Unterteil können durch Kleben, durch Ineinanderstecken kraft- und/oder formschlüssig oder durch Ineinanderschieben miteinander verbunden werden. Ober- und Unterteil können aber auch durch Ineinanderspritzen miteinander verbunden werden. Hierzu wird das fertige Oberteil in die Kunststoffspritzmaschine gelegt und von innen ausgespritzt.

Das Lösen des Oberteils 3 vom Unterteil 2 kann durch einen zusätzlichen Arbeitsgang, die seitliche Deformation des Oberteils in einem für den Benutzer verdeckten Bereich verhindert werden. Das Lösen des Oberteils vom Unterteil kann aber auch durch Rastnasen am Kunststoffbauteil und Ausnehmungen am Oberteil, die ineinandergreifen, verhindert werden.

Der zylindrische obere bzw. äußere Bereich 4 des Unterteils 2, der vom Oberteil 3 überdeckt ist, weist an seiner zylindrischen Außenseite 5 mehrere Vorsprünge 6 in Form von achsparallelen Zylindersegmenten auf, auf denen das Oberteil bzw. die Haube 3 klemmend sitzt. Hierbei besitzt jeder Vorsprung 6 weiter außen einen kleinen Radius als weiter innen, so dass die Klemmkraft zunimmt, während die Haube aufgedrückt wird.

Der nach unten aus der Haube 3 herausragende Bereich 7 des Unterteils kann unterschiedlich geformt sein und ist der jeweiligen Armatur und Thermostatknopftechnik angepasst,

## Patentansprüche

1. Wasserarmatur mit einem Thermostat zur Regelung des Gemisches aus Kalt- und Warmwasser, wobei der Thermostat durch ein Bedienungsteil insbesondere einen Handknopf verstellbar ist, der einen Sperrknopf (1) aus Kunststoff aufweist, der ein Betätigen des Bedienungsteils zum heißen Bereich hin und/oder eine Einstellung der Wassermenge zum größeren Bereich hin solange verhindert, bis der Sperrknopf zum Lösen der Sperre gedrückt ist, **dadurch gekennzeichnet, dass** der Sperrknopf (1) aus Kunststoff im außen sichtbaren Bereich eine metallene Haube (3) trägt.

2. Wasserarmatur nach Anspruch 1, **dadurch gekennzeichnet, dass** die Haube (3) außenseitig verchromt ist.

3. Wasserarmatur nach Anspruch 1 oder 2, **dadurch gekennzeichnet, dass** die Haube (3) aus Messing ist.

4. Wasserarmatur nach einem der vorherigen Ansprüche, **dadurch gekennzeichnet, dass** die Haube (3) am Kunststoff durch eine Rastverbindung, Schraubverbindung, Klebverbindung oder durch Ausspritzen mit Kunststoff befestigt ist.
